# EUROPEAN PATENT APPLICATION

(11) **EP 4 819 250 A1**
(43) Date of publication of application: **07.10.2026**
(21) Application number: 26160709.7
(22) Date of filing: 25.02.2026
(51) Int. Cl.: H01M 4/66, H01M 4/00, H01M 50/534

(54) **ELECTRODE ASSEMBLY AND SECONDARY BATTERY COMPRISING THE ELECTRODE ASSEMBLY**

(30) Priority: 31.03.2025 KR 20250040959
(71) Applicant: SAMSUNG SDI CO., LTD., Yongin-si, Gyeonggi-do 17084 (KR)
(72) Inventor: YANG, Dong Bok, Yongin-si, Gyeonggi-do 17084 (KR)
(74) Representative: Maiwald GmbH

(57) **Abstract**

An electrode assembly includes a first electrode, a second electrode, and a separator between the first electrode and the second electrode. At least one of the first electrode and the second electrode comprises a current collector comprising an uncoated portion, and an active material layer on the current collector. The current collector comprises a resin layer, an upper metal layer provided to a first side of the resin layer, and a lower metal layer provided to a second side of the resin layer. The resin layer comprises a substrate and a plurality of conductive particles in the substrate. The substrate comprises a first region corresponding to the uncoated portion and a second region corresponding to the active material layer, and the conductive particles are disposed in at least one of the first region and the second region.

## Description

### BACKGROUND

### 1. Field

Embodiments relate to an electrode assembly and a secondary battery including the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not form the prior art.

### SUMMARY

Embodiments provide an electrode assembly and a secondary battery having improved electrical characteristics.

The electrode assembly according to the embodiment includes a first electrode, a second electrode, and a separator between the first electrode and the second electrode, at least one of the first electrode and the second electrode comprises a current collector comprising an uncoated portion, and an active material layer on the current collector, the current collector comprises a resin layer, an upper metal layer provided to a first side of the resin layer, and a lower metal layer provided to a second side of the resin layer, and a lower metal layer under the resin layer, the resin layer comprises a substrate and a plurality of conductive particles in the substrate, the substrate comprises a first region corresponding to the uncoated portion and a second region corresponding to the active material layer, and the conductive particles are disposed in at least one of the first region and the second region.

The second region comprises a second-first region and a second-second region, the second-first region is closer to the first region than the second-second region, and the conductive particles are disposed in the first region, the second-first region, and the second-second region.

The density of the conductive particles in the first region is greater than the density of the conductive particles in the second-first region and the second-second region, and the density of the conductive particles in the second-first region is greater than the density of the conductive particles in the second-second region.

Distances between the conductive particles in the first region are less than distances between the conductive particles in the second-first region and the second-second region, and the distances between the conductive particles in the second-first region are less than the distances between the conductive particles in the second-second region.

The first region and the second region comprise different types of conductive particles.

The first region comprises first conductive particles, the second region comprises second conductive particles, and the conductivity of the first conductive particles is greater than the conductivity of the second conductive particles.

The density of the conductive particles in the first region is lower than the density of the conductive particles in the second-first region, and the density of the conductive particles in the second-first region is greater than the density of the conductive particles in the second-second region.

The first region and the second-first region comprise first conductive particles, the second-second region comprises second conductive particles, and the conductivity of the first conductive particles is greater than the conductivity of the second conductive particles.

The first region comprises first conductive particles, the second-first region comprises second conductive particles, the second-second region comprises third conductive particles, the conductivity of the first conductive particles is greater than the conductivity of the second conductive particles and the third conductive particles, and the conductivity of the second conductive particles is greater than the conductivity of the third conductive particles.

The conductivity of the resin layer gradually decreases in a direction moving away from the first region.

The conductive particles are disposed only in the first region.

The conductive particles are disposed in the first region and a part of the second region.

An area of the second-first region is greater than an area of the second-second region.

The uncoated portion is an electrode tab.

The uncoated portion is coupled to an electrode tab.

The electrode tab is coupled to the upper metal layer or the lower metal layer.

The particle size of the conductive particles is 0.005 µm to 50 µm.

A thickness of the resin layer is greater than a thickness of the metal layer.

Distances between the conductive particles is 1mm or more.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a perspective view showing a secondary battery according to an embodiment.
FIG. 2 is a top view showing an electrode assembly according to an embodiment.
FIG. 3 is a cross-sectional view showing the A-A' region of FIG. 2.
FIG. 4 is a cross-sectional view showing the B-B' region of FIG. 2.
FIG. 5 is a side view showing the electrode assembly according to an embodiment.
FIG. 6 is a top view showing a resin layer of a first electrode according to an embodiment.
FIGS. 7 to 10 are cross-sectional views showing the C-C' region of FIG. 6.
FIGS. 11 to 16 are top views showing the resin layer of the first electrode according to an embodiment.
FIG. 17 is a perspective view showing the secondary battery according to an embodiment.
FIG. 18 is a top view showing a first electrode according to an embodiment.
FIG. 19 is a cross-sectional view showing the D-D' region of FIG. 18.
FIG. 20 is a top view showing the first electrode according to an embodiment.
FIG. 21 is a cross-sectional view showing the E-E' region of FIG. 20.
FIGS. 22 and 23 are perspective views showing a battery pack including battery modules according to embodiments.
FIGS. 24 and 25 are perspective views and a side view showing a vehicle including battery packs according to embodiments.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, an electrode assembly and a secondary battery according to an embodiment will be described with reference to the drawings.

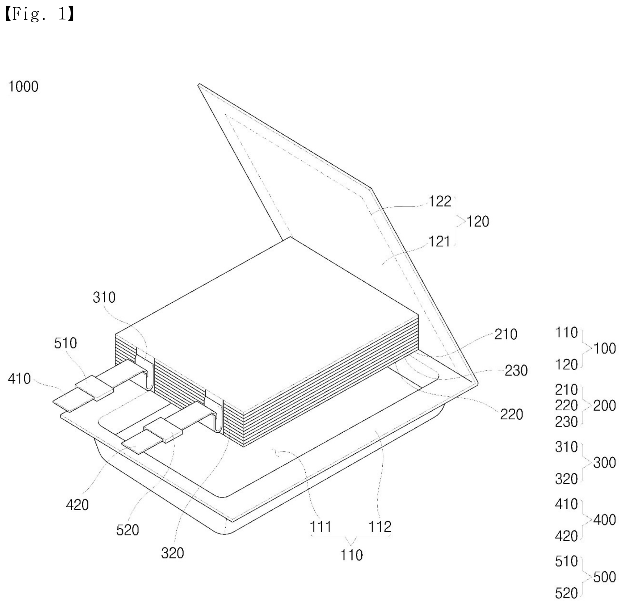

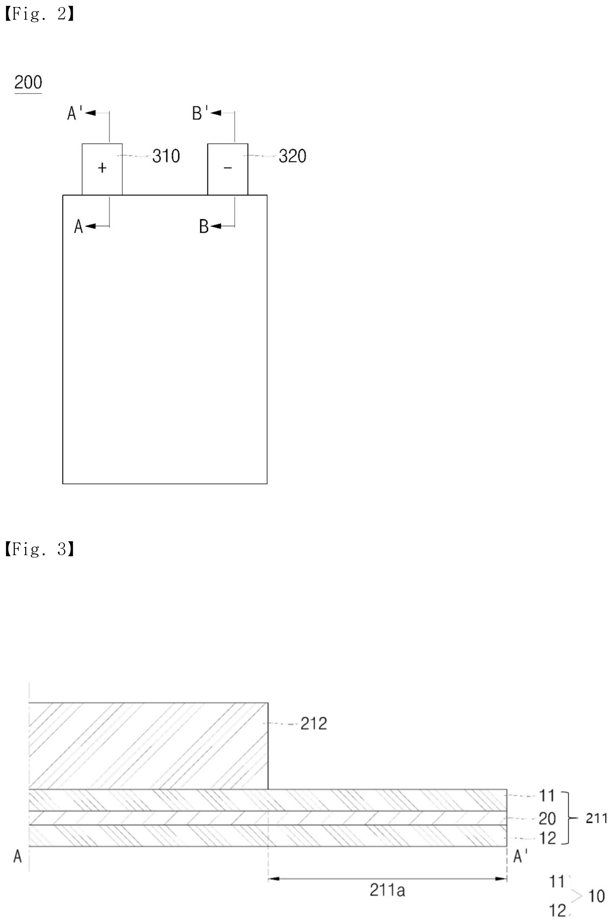

Referring to FIGS. 1 to 4, a secondary battery according to an embodiment may include a case 100 and an electrode assembly 200.

The case 100 may include a housing part 110 and a cap part 120. The housing part 110 and the cap part 120 may be connected. The case 100 may be formed in a pouch shape.

The housing part 110 may include a concave portion 111 and a first sealing region 112. The housing part 110 may include a housing space. Specifically, the housing part 110 may include an inner bottom surface and an inner side surface formed by the concave portion 111. The housing space may be formed by the inner bottom surface and the inner side surface.

The first sealing region 112 may be disposed at the edge of the housing part 110. A sealing layer may be disposed on the first sealing region 112.

The cap part 120 may include a cover portion 121 and a second sealing region 122. The cover portion 121 may cover the housing part 110. More specifically, the cover portion 121 may cover the electrode assembly 200 housed in the housing part 110.

The second sealing region 122 may be disposed at the edge of the cap part 120. The sealing layer may be disposed on the second sealing region 122. The first sealing region 112 and the second sealing region 122 may overlap each other. In detail, when the housing part 110 is covered by the cap part 120, the first sealing region 112 and the second sealing region 122 may face each other. Thus, the housing part 110 and the cap part 120 may be bonded by the sealing layer.

The electrode assembly 200 may be housed in the housing space of the case 100. The electrode assembly 200 may be housed in the housing space together with the electrolyte. In the FIG. 1, one electrode assembly is illustrated as being housed in the case. However, the present disclosure is not limited thereto. In other embodiments, two or more electrode assemblies may be housed in the case.

The electrode assembly 200 may include a first electrode 210, a second electrode 220, and a separator 230. The electrode assembly 200 may be formed by stacking the first electrode 210, the second electrode 220, and the separator 230. For example, the electrode assembly may be a Z-stack electrode assembly in which the first electrode 210 and the second electrode 220 are positioned on opposite sides of a separator 230 and folded in a Z-stack. Or the electrode assembly 200 may be formed by winding the first electrode 210, the second electrode 220, and the separator 230.

The first electrode 210 may include a first current collector 211 and a first active material layer 212 on the first current collector 211. The first current collector 211 may include a conductive material and a non-conductive material. For example, the first current collector 211 may include a plurality of first metal layers 10 and a first resin layer 20. The first metal layer 10 may be disposed on both sides of the first resin layer 20. Specifically, the first metal layer may include an upper first metal layer 11 and a lower first metal layer 12. In some embodiments, the upper first metal layer 11 may be provided to a first side of the first resin layer 20, and the lower first metal layer 12 may be provided to a second side of the first resin layer 20.

The first metal layer 10 may include, for example, a metal foil such as aluminum or an aluminum alloy. The first resin layer 20 may include, for example, polyimide (PI), polyethylene terephthalate (PET), polypropylene (PP), polyethylene (PE), polystyrene (PS), acrylonitrile butadiene styrene copolymer (ABS), POM (polyoxymethylene) resin, PVC (polyvinyl chloride) resin, polycarbonate (PC), PCL resin (Polycaprolactone), PLA resin (Polylactic acid), acrylic resin, polybutylene terephthalate (PBT), celluloid, TEFLON^{®} resin, poly(tetrafluoroethylene) resin (PTFE), Bakelite, epoxy resin, melamine, amino resin, or phenol resin. That is, the first current collector 211 may be a composite substrate including a metal and a non-metal. The first active material layer 212 may include a transition metal oxide. In some examples, the first electrode 210 may be a positive electrode.

The first electrode 210 may be connected to the first electrode tab 310. The first active material layer is not disposed on the first electrode tab 310. The first electrode tab 310 may be formed integrally with the first current collector. For example, the first current collector may include a first uncoated portion 211a on which the first active material layer is not disposed. The first uncoated portion may be notched. The first electrode tab 310 may be formed by the first uncoated portion. Thus, the first electrode tab 310 may include the same material as the first current collector. The first electrode tab 310 may be formed by the composite substrate including the metal and the non-metal.

The second electrode 220 may include a second current collector 221 and a second active material layer 222 on the second current collector 221. The second current collector 221 may include a conductive material and a non-conductive material. For example, the second current collector 221 may include a plurality of second metal layers 30 and a second resin layer 40. The second metal layers 30 may be disposed on both sides of the second resin layer 40. Specifically, the second metal layer may include an upper second metal layer 31 and a lower second metal layer 32. In some embodiments, the upper second metal layer 31 may be provided to a first side of the second resin layer 40, and the lower second metal layer 32 may be provided to a second side of the second resin layer 40.

The second metal layer 30 may include a metal foil such as copper, a copper alloy, nickel, or a nickel alloy. The second resin layer 40 may include a material that is the same or similar to the first resin layer 20. For example, the second resin layer 40 may include polyimide (PI), polyethylene terephthalate (PET), polypropylene (PP), polyethylene (PE), polystyrene (PS), acrylonitrile butadiene styrene copolymer (ABS), POM (polyoxymethylene) resin, PVC (polyvinyl chloride) resin, polycarbonate (PC), PLC resin, PLA resin, acrylic resin, polybutylene terephthalate (PBT), celluloid, TEFLON^{®} resin, poly(tetrafluoroethylene) resin (PTFE), Bakelite, epoxy resin, melamine, amino resin, or phenol resin. That is, the second current collector may be the composite substrate including the metal and the non-metal. The second active material layer 222 may include graphite or carbon. In some examples, the second electrode 220 may be a negative electrode.

The second electrode 220 may be connected to the second electrode tab 320. The second active material layer is not disposed on the second electrode tab 320. The second electrode tab 320 may be formed integrally with the second current collector. The second current collector may include a second uncoated portion 221a where the second active material layer is not disposed. The second uncoated portion may be notched. The second electrode tab 320 may be formed by the second uncoated portion. Thus, the second electrode tab 320 may include the same material as the second current collector. Therefore, the second electrode tab 320 may be formed by the composite substrate including the metal and the non-metal.

The first electrode tab 310 and the second electrode tab 320 may each be connected to a lead. For example, the first electrode tab 310 may be connected to a first lead 410, with the first electrode tab 310 thereby being connected to the first external terminal by the first lead 410. The second electrode tab 320 may be connected to a second lead 420, with the second electrode tab 320 thereby being connected to the second external terminal by the second lead 420. The first lead 410 may include the same material as the first electrode tab. And the second lead 420 may include the same material as the second electrode tab. The electrode tabs 300 and the leads 400 may be coupled by welding.

The first current collector 211 and the second current collector 221 include the composite substrate. Accordingly, the weight of the first current collector 211 and the second current collector 221 may be reduced, the weight of the electrode assembly may thereby be reduced, and the energy density per weight of the electrode assembly may be increased.

An insulating layer may be disposed on the lead. For example, a first insulating layer 510 may be disposed on the first lead 410. The first insulating layer 510 may surround a part of the first lead 410. Similarly, a second insulating layer 520 may be disposed on the second lead 420, with the second insulating layer 520 surround7ing a part of the above second lead 420. The lead 400 may be insulated from the case 100 by the insulating layer 500. And the lead 400 and the case 100 may be easily bonded by the insulating layer 500 and the sealing layer. Further, the first lead 410 and the second lead 420 may be insulated by the insulating layer 500.

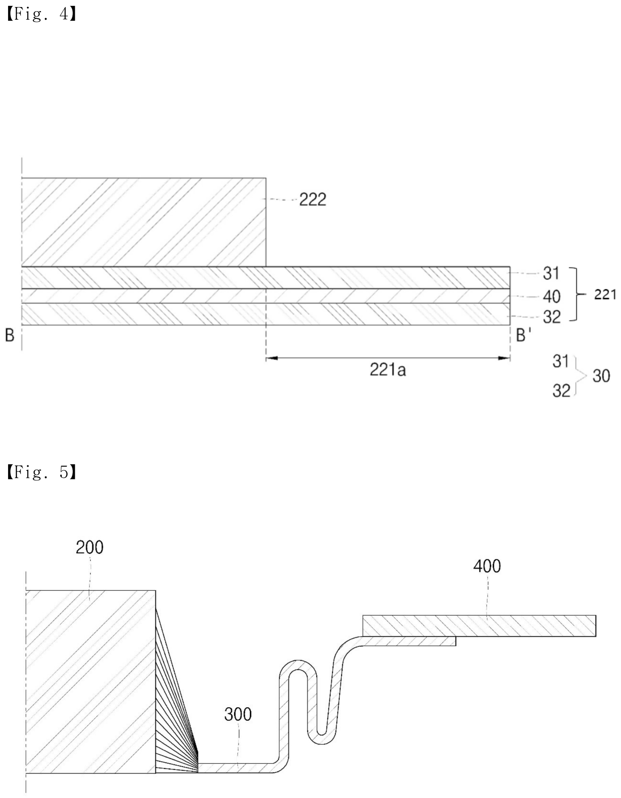

Referring to FIG. 5, the electrode assembly 200 may include the plurality of electrode tabs 300. More specifically, since each electrode includes at least one electrode tab, the stacked electrode assembly 200 includes a plurality of electrodes that include the plurality of electrode tabs 300.

The plurality of electrode tabs 300 are electrically connected, for example by welding the electrode tabs 300 to each other. The electrode tabs may be bent at least once and then coupled to the lead 400 by welding.

In prior art, the plurality of electrode tabs are directly welded and coupled. However, as described above, each of the first electrode tabs and each of the second electrode tabs include a resin layer. Therefore, even if the electrode tabs are welded, the electrode tabs are not electrically connected by the resin layer. Accordingly, a process of further forming a separate connection tab on the electrode tabs and then welding the separate connection tab is required in the prior art.

The electrode assembly according to embodiments of the present disclosure may include the resin layer containing a conductive material. Accordingly, the electrode tabs may be electrically connected by direct welding without a process of forming separate connecting tabs.

Hereinafter, the first electrode and the second electrode according to the embodiment will be described with reference to the drawings. The following description may be applied to at least one of the first electrode and the second electrode. The first electrode will be mainly described, but the following description may be equally applied to the second electrode.

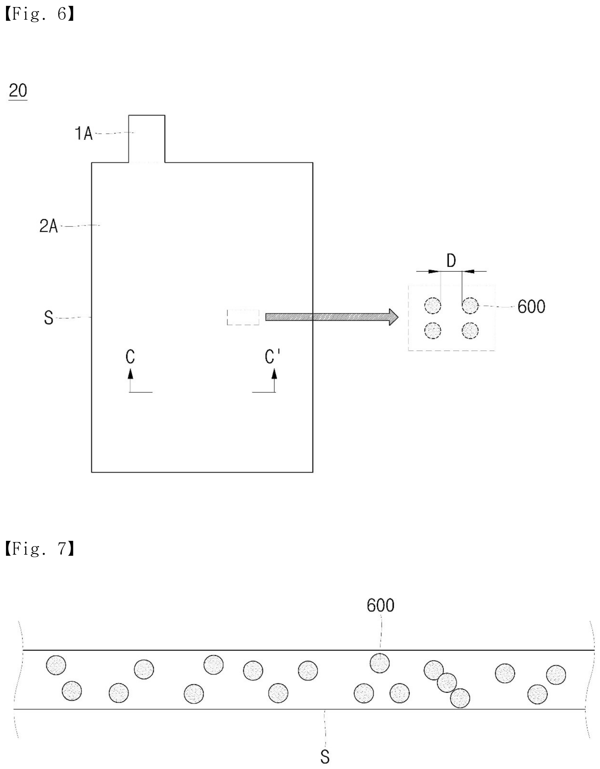

FIGS. 6 to 8 show the first resin layer. Referring to FIGS. 6 to 8, the first resin layer 20 may include a substrate S and a plurality of conductive particles 600. The substrate S may include the resin described above and may have a set thickness. A thickness of the substrate S may be greater than a thickness of the metal layer. That is, the thickness of the resin layer may be greater than the thickness of the metal layer. For example, the thickness of the substrate S may be 70% to 80% of the thickness of the current collector. In some examples, the thickness of the substrate of the first electrode may be 5 µm to 9 µm and the thickness of the substrate of the second electrode may be 2 µm to 6 µm. In some embodiments, a thickness of the first resin layer 20 may be greater than a sum of thicknesses of the upper first metal layer 11 and the lower first metal layer 12. In some embodiments, a thickness of the second resin layer 40 may be greater than a sum of thicknesses of the upper second metal layer 31 and the lower second metal layer 32.

The conductive particles 600 may include various conductive materials. For example, the conductive particles 600 may include carbon nanotubes or carbon black. The conductive particles 600 may have a set particle size. For example, the particle size (D50) of the conductive particles 600 may be 0.005 µm to 50 µm, 0.01 µm to 40 µm or 0.02 µm to 30 µm, with the gaps D between the conductive particles 600 being 1 mm or more. The particle size (D50) may be measured by dynamic light scattering or laser diffraction using a known particle size analyzer.

The substrate S may be divided into a plurality of regions. For example, the substrate S may include a first region 1A and a second region 2A. The first region 1A may be a region corresponding to the first uncoated portion 211a. That is, the first region 1A may be a region corresponding to the first electrode tab 310. The second region 2A may be a region where the first active material layer 212 is provided. The conductive particles 600 may be disposed in at least one of the first region 1A and the second region 2A. For example, the conductive particles 600 may be disposed in both the first region 1A and the second region 2A.

The conductive particles 600 may be disposed in the substrate S in various ways. For example, the conductive particles may be mixed with a resin forming the substrate to form a resin composition, and then the resin composition may be cured. Accordingly, the plurality of conductive particles 600 may be disposed in the substrate S. As shown in FIG. 7, in this case the conductive particles 600 may be randomly disposed in the substrate S.

In other embodiments, the substrate S may include a plurality of housing portions. The conductive particles 600 may be housed in the housing portions. In detail, one conductive particle may be housed in one housing portion. The housing portions may be formed by various methods. For example, the housing portions may be formed using a laser. In detail, the substrate S may be irradiated with the laser during a roll-to-roll process. Accordingly, holes or grooves are formed by the laser into the surface of the substrate S. The holes or grooves thereby constitute a plurality of housing portions formed in the substrate S. In other embodiments, the substrate S may pass through at least one roller in which a plurality of embossed patterns are formed during the roll-to-roll process. The holes or grooves corresponding to the embossed pattern are formed in the substrate S and constitute a plurality of housing portions formed in the substrate S.

After the holes or grooves are formed, conductive particles 600 may be inserted into the housing portions. For example, a conductive material may be applied to the substrate S during a roll-to-roll process. In more detail, the conductive particles 600 may be inserted into the housing portion through a dot-print application process. Subsequently, the substrate S may be compressed by a press process, and the conductive particles 600 may be inserted into the substrate S. A position and/or an amount of the conductive particles 600 disposed on the substrate S may be controlled.

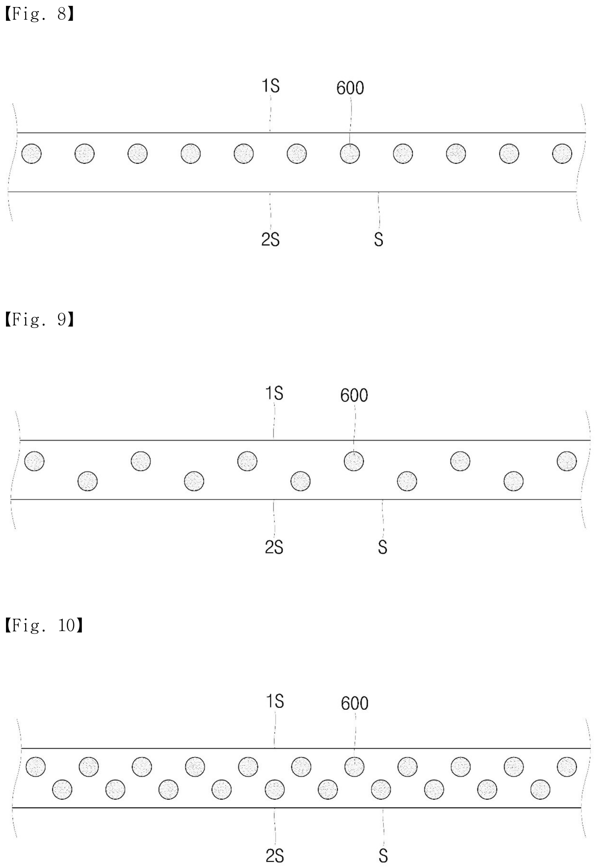

Referring to FIGS. 8 to 10, the conductive particles 600 may be formed of at least one layer.

Referring to FIG. 8, the conductive particles 600 may be formed as singer layer. More specifically, the depths of a plurality of conductive particles in the substrate may be the same or similar. In the depicted example, the substrate S includes a first surface 1S and a second surface 2S, with housing portions formed on the first surface 1S. The depths of the housing portions may be the same or similar. Accordingly, the depths of a plurality of conductive particles housed in the housing portions may be the same or similar.

Referring to FIGS. 9 and 10, in other embodiments, the conductive particles 600 may be formed as multiple layers. And the depths of the conductive particles 600 disposed in different layers may be different.

Referring to FIG. 9, the substrate S may include housing portions formed on the first surface 1S. The depths of the housing portions may be different from each other. Accordingly, the depths of the plurality of conductive particles housed in the housing portions may be different.

Referring to FIG. 10, the substrate S may include housing portions formed on the first surface 1S and the second surface 2S. The depths of the housing portions may be different from each other. Accordingly, the depths of the plurality of conductive particles housed in the housing portions may be different. In the depicted embodiment, when forming the housing portions, interference between adjacent housing portions may be reduced. Accordingly, the spacing between the housing portions may be reduced. Thus, the density of the conductive particles may be increased.

The first resin layer 20 may include the conductive particles 600. Accordingly, the first resin layer 20 may have conductivity. Thus, the upper first metal layer 11 and the lower first metal layer 12 may be electrically connected by the first resin layer 20. Accordingly, the first current collector 211 be electrically conductive throughout its structure.

According to embodiments of the present disclosure, the weight and thickness of the electrode assembly may be reduced by the configurations of first current collector and the second current collector. Further, the energy density per weight of the electrode assembly may be increased. And the current collectors may have conductivity throughout their structures. That is, the upper first metal layer, the first resin layer, and the lower first metal layer may be electrically connected. As such, when connecting electrode tabs, a separate connecting tab is not required, and the electrode tabs may be easily connected.

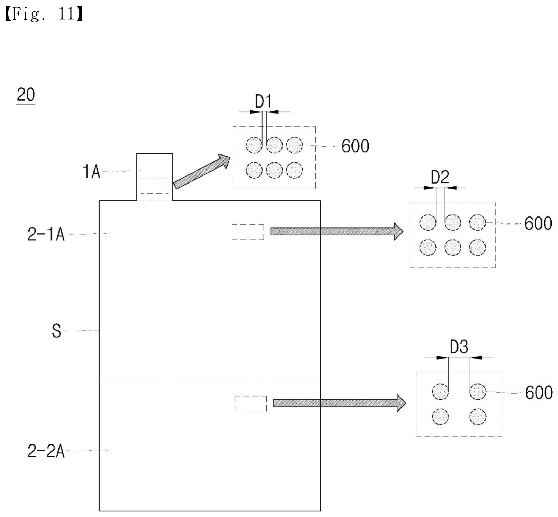

Referring to FIGS. 11 to 16, the conductive particles may have different densities at different locations, or the conductive particles may have different conductivity at different locations. With such configurations, the reliability of the electrode assembly may be improved.

Referring to FIG. 11, the substrate S may be divided into a plurality of regions. For example, the substrate S may include the first region 1A and the second region. The second region may include a second-first region 2-1A and a second-second region 2-2A. The first region 1A may correspond to the first electrode tab 310. The second-first region 2-1A and the second-second region 2-2A may correspond to the first active material layer 212.

The second-first region 2-1A may be closer to the first region 1A than the second-second region 2-2A. Specifically, the second-first region 2-1A may be disposed between the first region 1A and the second-second region 2-2A. The areas of the second-first region 2-1A and the second-second region 2-2A may be different. For example, the area of the second-first region 2-1A may be greater than or equal to the area of the second-second region 2-2A. In specific examples, the area of the second-first region 2-1A may be 50% to 70% of the area of the second region.

The conductive particles 600 may be disposed in the first region 1A, the second-first region 2-1A, and the second-second region 2-2A. The density of the conductive particles may vary depending on the region. For example, the density of the conductive particles in the first region may be greater than the density of the conductive particles in other regions (e.g., the second-first region and the second-second region), and the density of the conductive particles in the second-first region may be greater than the density of the conductive particles in the second-second region.

The density of the conductive particles may be controlled by the spacing between the conductive particles. For example, when forming the housing portions using a laser or roller in the substrate, the spacing between the housing portions may be controlled, thereby the spacing between the conductive particles may be controlled. In the depicted example, the conductive particles in the first region are spaced from each other by a distance D1, the conductive particles in the second-first region are spaced from each other by a distance D2, and the conductive particles in the second-second region are spaced from each other by a distance D3.

The first distance D1 may be less than the second distance D2 and the third distance D3. Accordingly, the density of the conductive particles in the first region may be greater than the densities of the conductive particles in other regions. The second distance D2 may be less than the third distance D3. Accordingly, the density of the conductive particles in the second-first region may be greater than the density of the conductive particles in the second-second region.

The first region 1A corresponds to the electrode tab. That is, the first region 1A is where there is a connection to the lead 400. As such, current is concentrated in the first region 1A. To facilitate this configuration, the density of the conductive particles in the first region may be greater than that in other regions. Therefore, the current may easily pass through the first region.

The second-first region 2-1A is adjacent to the electrode tab 310. Accordingly, the second-first region 2-1A may be more vulnerable to heat generation than the second-second region 2-2A. To account for such heat generation, the density of the conductive particles in the second-first region may be greater than that in the second-second region. Therefore, the resistance and heat generation of the second-first region may be reduced. In a specific example, the ratio of the density of the conductive particles in the second-first region and the density of the conductive particles in the second-second region may be 6:4.

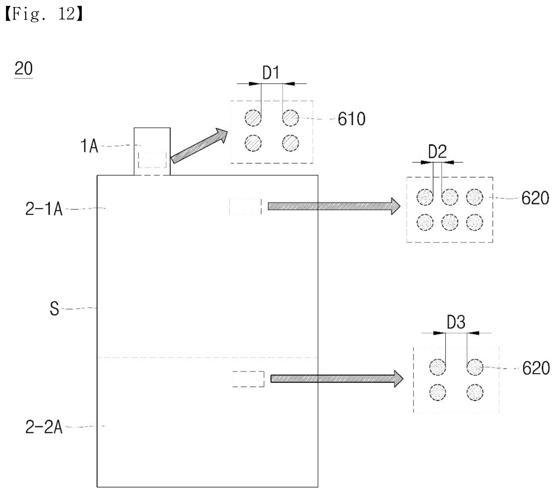

Referring to FIG. 12, the conductive particles may be different depending on the region. For example, the conductive particles may include first conductive particles 610 and second conductive particles 620. The first conductive particle 610 may be disposed in the first region 1A, and the second conductive particle 620 may be disposed in the second-first region 2-1A and the second-second region 2-2A. Thus, different conductive particles are disposed in the first region and the second region.

The first conductive particle 610 may have a first conductivity, and the second conductive particle 620 may have a second conductivity, and the first conductivity and the second conductivity may be different. Specifically, the first conductivity may be greater than the second conductivity. The conductivity of the conductive particles may be controlled by mixing an additive, etc.

Since the first region 1A includes the first conductive particle, current may easily pass through the first region.

As discussed above, the density of the conductive particles in each region may be different. In specific examples, the first conductive particles in the first region 1A may be spaced from each other by a distance D1, the second conductive particles in the second-first region 2-1A may be spaced from each other by a distance D2. The second conductive particles in the second-second region 2-2A may be spaced from each other by a distance D3.

The second distance D2 may be less than the third distance D3. Accordingly, the density of the second conductive particles in the second-first region may be greater than the density of the second conductive particles in the second-second region. Thus, the resistance and heat generation of the second-first region may be reduced. In a specific example, the ratio of the density of the second conductive particles in the second-first region and the density of the second conductive particles in the second-second region may be 6:4.

The first distance D1 may be similar to the third distance D3. For example, a difference between the first distance D1 and the third distance D3 may be 1 mm or less. Accordingly, the density of the first conductive particles in the first region and the density of the second conductive particles in the second-second region may be similar. Further, the first distance D1 may be greater than the second distance D2. Accordingly, the density of the first conductive particles in the first region may be less than the density of the second conductive particles in the second-first region. As the conductivity of the first conductive particles may be greater than that of the second conductive particles, even when the density of the first conductive particles in the first region decreases, the first region may have high conductivity. Thus, the current may easily pass through the first region. And the process of providing the first conductive particles to the first region may be facilitated. That is, since the number of housing portions in the first region is reduced, the process efficiency of forming the current collector may be improved.

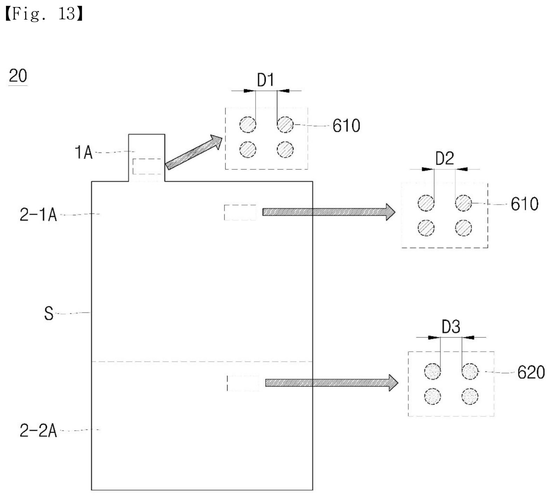

Referring to FIG. 13, in an embodiment the first conductive particles 610 may be disposed in the first region 1A and the second-first region 2-1A, while the second conductive particles 620 may be disposed in the second-second region 2-2A. That is, different types of conductive particles may be disposed in the first region 1A, the second-first region 2-1A, and the second-second region 2-2A. In detail, first conductive particles having high conductivity are disposed in the first region 1A and the second-first region 2-1A, and second conductive particles having relatively low conductivity are disposed in the second-second region 2-2A. With such a configuration, current may easily pass through the first region. And the resistance and heat generation of the second-first region may be reduced.

The density of the conductive particles in each region may be the same or similar. Specifically, the first conductive particles in the first region may be spaced from each other by a distance, D1, the first conductive particles in the second-first region may be spaced from each other by a distance D2, and the second conductive particles in the second-second region may be spaced from each other by a distance D3. The first distance D1, the second distance D2, and the third distance D3 may be the same or similar. For example, the difference between the first distance D1, the second distance D2, and the third distance D3 may be 1 mm or less. The first conductive particles 610 may have a higher conductivity than the second conductive particles 620. Thus, even if the density of the conductive particles in the first region 1A and the second-first region 2-1A is small, the conductivity of the first region 1A and the second-first region (2-1A) may be large.

The housing portions of the first region 1A, the second-first region 2-1A, and the second-second region 2-2A may be formed in one process. That is, a separate process for making the densities of the housing portions of the first region 1A, the second-first region 2-1A, and the second-second region 2-2A different may be omitted. Therefore, the process efficiency of forming the current collector may be improved.

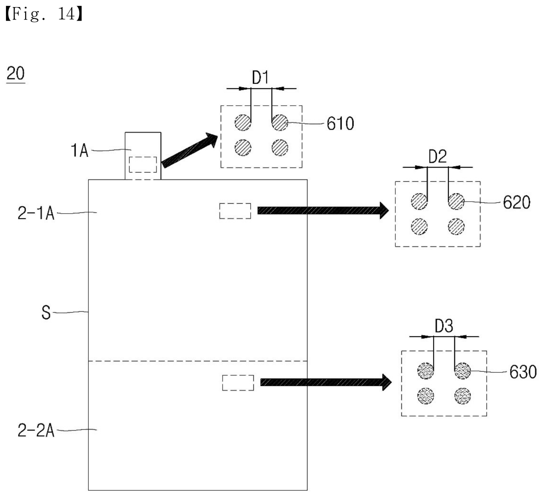

Referring to FIG. 14, the conductive particles may include first conductive particles 610, second conductive particles 620, and third conductive particles 630. The first conductive particles 610 may be disposed in the first region 1A, the second conductive particles 620 may be disposed in the second-first region 2-1A, and the third conductive particles 630 may be disposed in the second-second region 2-2A. That is, different conductive particles may be disposed in the first region, the second-first region, and the second-second region.

The first conductive particle 610 may have a first conductivity, the second conductive particle 620 may have a second conductivity, and the third conductive particle 630 may have a third conductivity. The first conductivity, the second conductivity, and the third conductivity may be different. In some examples, the first conductivity may be greater than the second conductivity and the third conductivity, and the second conductivity may be greater than the third conductivity. Since the first region 1A includes the first conductive particles, current may easily pass through the first region. Since the second-first region 2-1A has a greater conductivity than the second-second region 2-2A, resistance and heat generation of the second-first region may be reduced.

Further, the conductivity of the first resin layer 20 may gradually decrease in a direction moving away from the first region. Therefore, it is possible to prevent the resistance of the first resin layer from changing rapidly. And, in other words, the second-first region 2-1A may be a buffer region. Therefore, it is possible to prevent the substrate or the active material layer from being deformed or damaged by a rapid change in resistance.

The density of the conductive particles in each region may be the same or similar. For example, the first conductive particles in the first region may be spaced from each other by a distance D1, the second conductive particles in the second-first region may be spaced from each other by a distance D2, and the third conductive particles in the second-second region may be spaced from each other by a distance D3.

The first distance D1, the second distance D2, and the third distance D3 may be the same or similar. For example, the difference between the first distance D1, the second distance D2, and the third distance D3 may be 1 mm or less. The first conductive particles 610 may have greater conductivity than the second conductive particles 620 and the third conductive particles 630. And the second conductive particles 620 may have a greater conductivity than the third conductive particles 630.

The housing portions of the first region 1A, the second-first region 2-1A, and the second-second region 2-2A may be formed in one process. That is, a separate process for making the densities of the housing portions of the first region 1A, the second-first region 2-1A, and the second-second region 2-2A different may be omitted. Therefore, the process efficiency of forming the current collector may be improved.

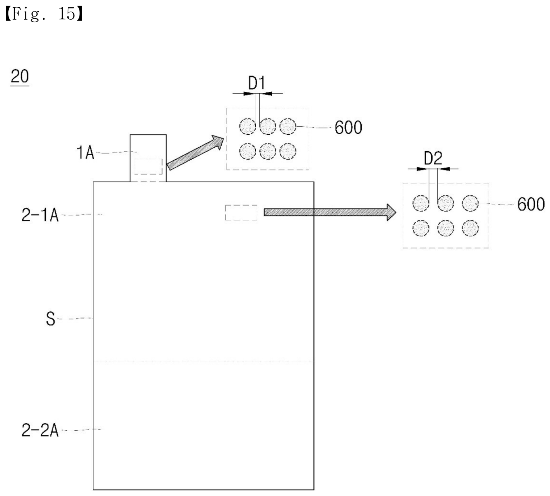

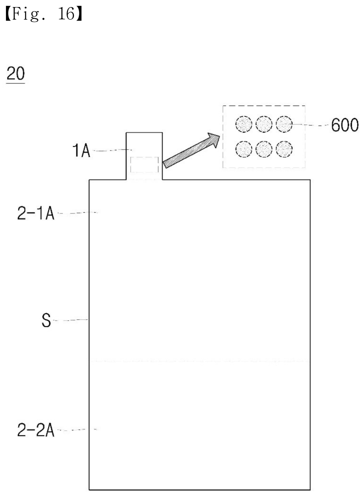

Referring to FIGS. 15 and 16, the conductive particles 600 may be disposed in only a part of the substrate S. For example, the conductive particles 600 may be disposed in at least one of the first region 1A and the second-first region 2-1A but not disposed in the second-second region 2-2A. For example, referring to FIG. 15, the conductive particles 600 may be disposed in the first region 1A and the second-first region 2-1A. Or referring to FIG. 16, the conductive particles 600 may be disposed only in the first region 1A. Since the conductive particles 600 are disposed in the first region 1A, the first region 1A may have conductivity. Accordingly, the electrode tabs 300 may be electrically connected to each other without a separate connection tab and may be electrically connected to the lead 400. And, since conductive particles 600 are disposed in a part of the second region, the conductivity of the current collector may be improved. Further, heat generation in the current collector may be reduced.

The secondary battery according to the embodiment includes the current collector including the resin layer. The resin layer includes conductive particles. Therefore, the resin layer has conductivity. In particular, the uncoated portion corresponding to the electrode tab may have conductivity. Therefore, the metal layers disposed on the upper and lower portions of the resin layer may be electrically connected, and electrode tabs may be directly electrically connected without a separate connection tab.

The conductive particles are disposed differently depending on the position of the resin layer. For example, the density of the conductive particles may be different depending on the position of the resin layer. In other examples, the type of the conductive particles may be different depending on the position of the resin layer. Accordingly, current may easily flow through the current collector. And resistance and heat generation in the current collector may be reduced.

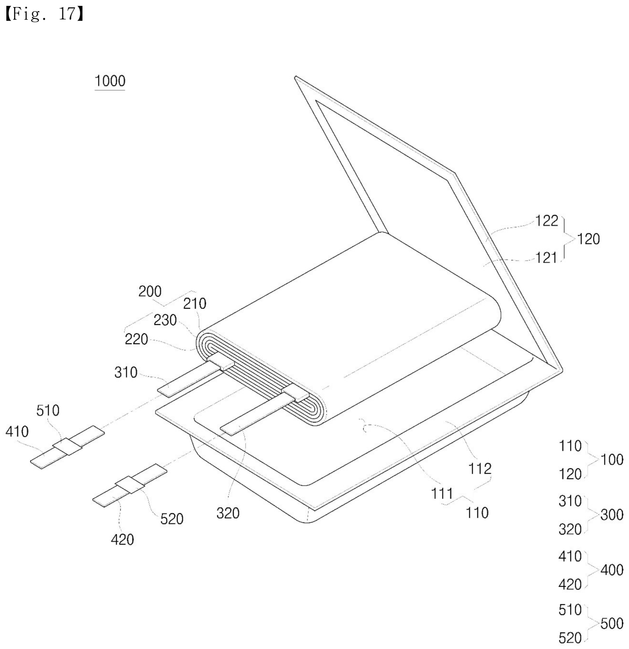

Hereinafter, the secondary battery according to another embodiment will be described with reference to FIGS. 17 to 19. Commonalities with the embodiment described above will be omitted. In addition, the same drawing reference numerals are given to the same configurations as those of the embodiment.

Referring to FIG. 17, the electrode assembly 200 may be formed by winding the first electrode 210, the second electrode 220, and the separator 230. For example, the electrode assembly 200 may be formed by winding the first electrode 210, the second electrode 220, and the separator 230 in a jelly roll shape. The electrode tab 300 may be formed separately or integrally with the current collector.

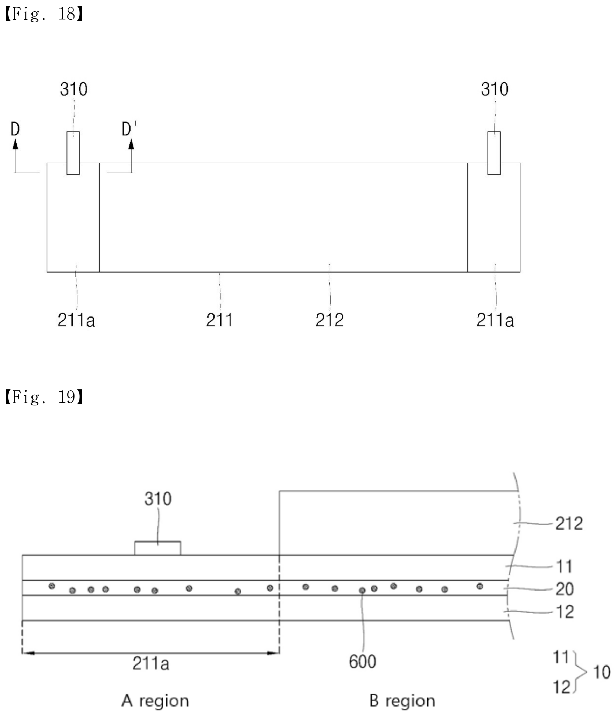

FIGS. 18 to 21 show the first electrode. The following description may be equally applied to the second electrode.

Fig. 18 is a top view of the first electrode before winding. Referring to FIGS. 18 and 19, the first current collector 211 may include at least one first uncoated portion 211a. For example, the first current collector 211 may include first uncoated portions 211a disposed at opposite ends. In detail, the first uncoated portions may be disposed at the winding front end and the winding end of the first electrode.

The first electrode tab 310 may be disposed on the first uncoated portions. The first electrode tab 310 may be coupled to the first uncoated portion by welding. The first electrode tab 310 may be formed from a material that is the same or similar to the first current collector 211. In some examples, the first electrode tab 310 may be formed separately from the first current collector 211.

The first current collector 211 may include the first metal layer 10 and the first resin layer 20. The first metal layer may include the upper first metal layer 11 and the lower first metal layer 12. The first resin layer 20 may be conductive due to the conductive particles 600 being disposed in the first resin layer 20. Therefore, the upper first metal layer 11 and the lower first metal layer 12 may be electrically connected by the first resin layer 20.

The first electrode tab 310 may be welded with the upper first metal layer 11 or the lower first metal layer 12. As the first resin layer 20 is conductive, the upper first metal layer 11 and the lower first metal layer 12 are electrically connected. Therefore, even if the first electrode tab 310 is welded to the upper first metal layer 11 or the lower first metal layer 12, the first electrode tab 310 may be electrically connected to the upper first metal layer 11 and the lower first metal layer 12. Thus, the depicted embodiment does not require a separate connecting tab for electrically connecting the upper first metal layer 11 and the lower first metal layer 12, and the electrode can be easily formed.

Similar to the embodiments described above, the density and type of the conductive particles may vary depending on the location. For example, the first resin layer 20 may include an A region corresponding to the first uncoated portion 211a and a B region other than the A region. The density of the conductive particles in the A region may be greater than the density of the conductive particles in the B region. As described above, the density of the conductive particles may be controlled by the distances between the conductive particles.

As also described above, in some embodiments the conductive particles in the A region and the conductive particles in the B region may be different from each other. For example, the conductivity of the conductive particles in the A region may be greater than the conductivity of the conductive particles in the B region.

In other embodiments, the conductive particles 600 may be disposed in a part of the resin layer. For example, the conductive particles 600 may be disposed in the A region and the B region. Or the conductive particles 600 may be disposed only in the A region. Or the conductive particles 600 may be disposed in the A region and in a part of the B region.

As such, the first current collector 211 may have electrical conductivity throughout its structure. And heat generation in the first current collector may be reduced.

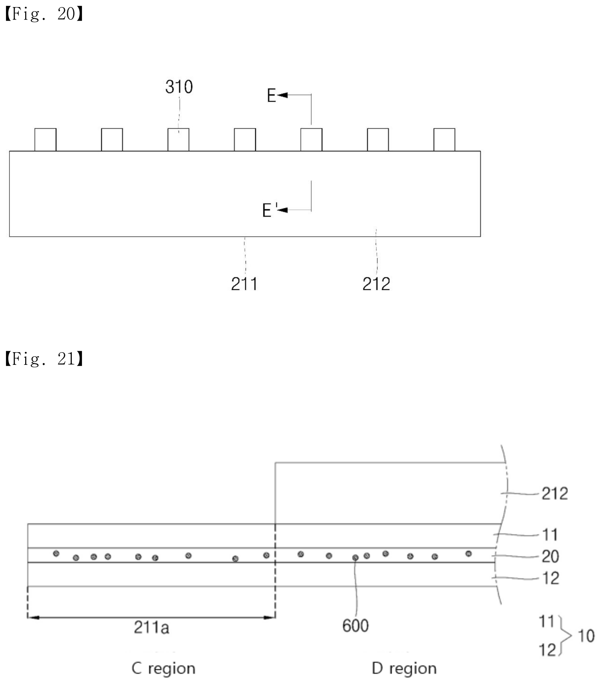

FIG. 20 is another top view of the first electrode before winding. Referring to FIGS. 20 and 21, the first current collector 211 may include at least one first uncoated portion 211a. The first uncoated portion 211a may be notched to form a plurality of first electrode tabs 310. That is, in some embodiments, the first electrode tabs 310 may be formed integrally with the first current collector (211).

The first current collector 211 may include the first metal layer 10 and the first resin layer 20. The first metal layer 10 may include the upper first metal layer 11 and the lower first metal layer 12. The first resin layer 20 may have conductivity due to the conductive particles 600 in the first resin layer 20. Therefore, the upper first metal layer 11 and the lower first metal layer 12 may be electrically connected by the first resin layer 20.

With the configuration depicted in FIGS. 20 and 21, a separate connecting tab is not required and the electrode tabs 310 may be welded together. That is, as the first resin layer 20 has conductivity, the upper first metal layer 11 and the lower first metal layer 12 are electrically connected. Therefore, each of the electrode tabs is provided with electrical conductivity. As such embodiments do not require the separate connecting tabs for electrically connecting the upper first metal layer 11 and the lower first metal layer 12, the electrode tabs may be easily formed.

As described above, the density and type of the conductive particles may vary depending on the location. For example, the first resin layer 20 may include a C region corresponding to the first electrode tab 310 and a D region other than the C region. The density of the conductive particles in the C region may be greater than the density of the conductive particles in the D region. As described above, the density of the conductive particles may be controlled by the distances between the conductive particles. Further, the conductive particles in the C region and the conductive particles in the D region may be different from each other. In detail, the conductivity of the conductive particles in the C region may be greater than the conductivity of the conductive particles in the D region.

In further embodiments, the conductive particles 600 may be disposed in a part of the resin layer. For example, the conductive particles 600 may be disposed in the C region and the D region. Or the conductive particles 600 may be disposed only in the C region. Or the conductive particles 600 may be disposed in the C region and a part of the D region.

According to such embodiments, the first current collector may have conductivity throughout its structure, and heat generation in the first current collector may be reduced.

The secondary battery according to the embodiment includes the electrode assembly. The electrode assembly includes the first electrode, the second electrode, and the separator. Each of the first electrode and the second electrode include the current collector and the active material layer on the current collector.

The current collector includes the metal layer and the resin layer. The metal layer is disposed on the upper and lower portions of the resin layer. The resin layer includes conductive particles. Therefore, the upper metal layer and the lower metal layer are electrically connected by the resin layer. Accordingly, the current collector has conductivity throughout its structure.

The current collector includes the uncoated portion where the active material layer is not disposed. The uncoated portion may be the electrode tab. The resin layer provides conductivity to the uncoated portion. Therefore, when electrically connecting multiple electrode tabs, a separate connection tab is not required.

In further embodiments, the electrode tab may be coupled to the uncoated portion. For example, the electrode tab may be coupled to the upper metal layer or the lower metal layer. The uncoated portion has conductivity by the resin layer. Therefore, when the electrode tab and the uncoated portion are coupled, the electrode tab may be electrically connected to the upper metal layer and the lower metal layer. And a separate connection tab is not required.

The electrode assembly and the secondary battery according to embodiments of the present disclosure may be easily manufactured. A decrease in reliability due to damage to the separate connection tab may be prevented in the electrode assembly and the secondary battery. And an increase in resistance due to the separate connection tab may be prevented. Therefore, the electrode assembly and the secondary battery according to embodiments may have improved electrical characteristics.

The secondary battery may be used in portable small electronic devices such as smartphones, feature phones, notebook computers, digital cameras, and camcorders. A battery module and a battery pack including a plurality of secondary batteries may be used as a power source for driving a motor of a hybrid vehicle or an electric vehicle and as a battery for storing power.

The secondary battery described above may form a battery module. For example, the battery module may include a plurality of secondary batteries. The plurality of secondary batteries may be connected to each other in series, parallel, or series/parallel by a bus bar.

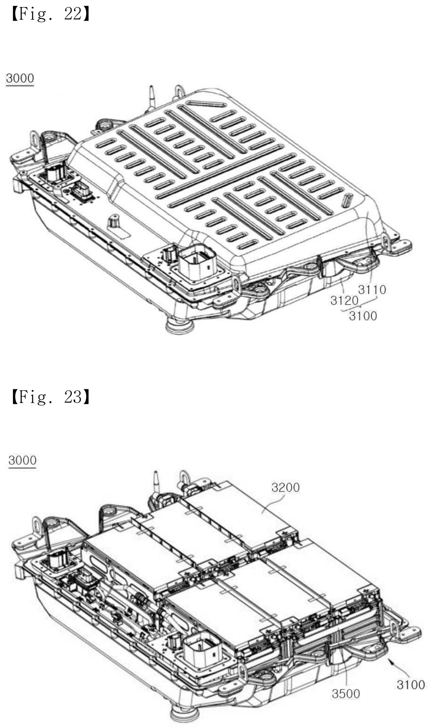

FIGS. 22 and 23 show a battery pack 3000 according to one or more example embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar 3500, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of secondary battery are omitted. In one or more example embodiments, battery pack 3000 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

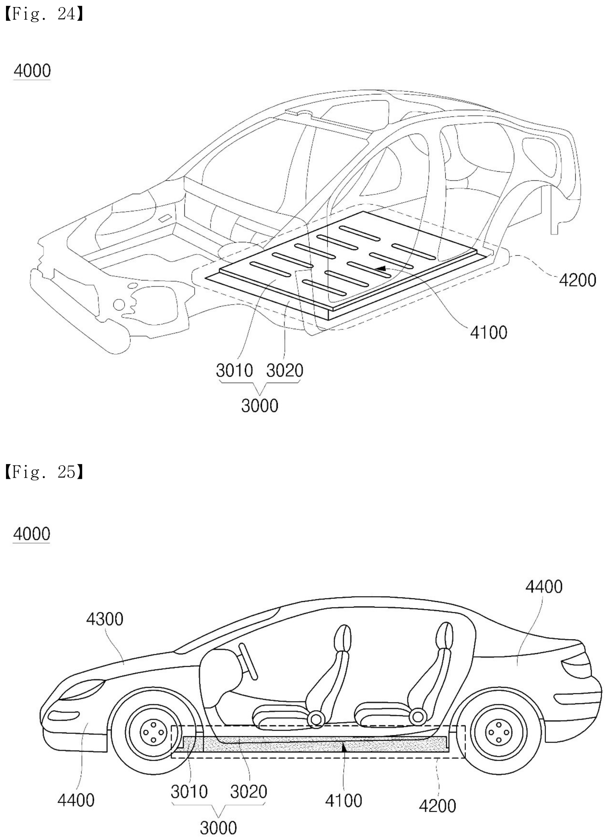

In FIG. 24, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrally formed with a vehicle floor 4200. The vehicle underbody 4100 separates the inside and outside of a vehicle, and the pack frame 3020 may be disposed outside the vehicle.

In FIG. 25, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The above is only one embodiment for implementing a secondary battery according to the disclosure, the disclosure is not limited to the above embodiment, and there is a technical spirit of the disclosure to the extent that various modifications can be made by anyone having ordinary skill in the art to which the disclosure pertains without departing from the gist of the disclosure.

## Claims

1. An electrode assembly comprising:
a first electrode;
a second electrode; and
a separator between the first electrode and the second electrode,
wherein at least one of the first electrode and the second electrode comprises a current collector comprising an uncoated portion, and an active material layer on the current collector,
wherein the current collector comprises a resin layer, an upper metal layer on the resin layer provided to a first side of the resin layer, and a lower metal layer provided to a second side of the resin layer,
wherein the resin layer comprises a substrate and a plurality of conductive particles in the substrate,
wherein the substrate comprises a first region corresponding to the uncoated portion and a second region corresponding to the active material layer, and
wherein the conductive particles are disposed in at least one of the first region and the second region.

2. The electrode assembly as claimed in claim 1, wherein the second region comprises a second-first region and a second-second region,
wherein the second-first region is closer to the first region than the second-second region, and
wherein the conductive particles are disposed in the first region, the second-first region, and the second-second region.

3. The electrode assembly as claimed in claim 2, wherein a density of the conductive particles in the first region is greater than a density of the conductive particles in the second-first region and the second-second region, and
wherein the density of the conductive particles in the second-first region is greater than a density of the conductive particles in the second-second region.

4. The electrode assembly as claimed in claim 3, wherein distances between the conductive particles in the first region are less than distances between the conductive particles in the second-first region and in the second-second region, and
wherein the distances between the conductive particles in the second-first region is less than the distances between the conductive particles in the second-second region.

5. The electrode assembly as claimed in any one of claims 2 to 4, wherein the first region and the second region comprise different types of conductive particles.

6. The electrode assembly as claimed in claim 5, wherein the first region comprises first conductive particles,
wherein the second region comprises second conductive particles, and
wherein conductivity of the first conductive particles is greater than conductivity of the second conductive particles.

7. The electrode assembly as claimed in claim 3, wherein the density of the conductive particles in the first region is lower than the density of the conductive particles in the second-first region, and
wherein the density of the conductive particles in the second-first region is greater than the density of the conductive particles in the second-second region.

8. The electrode assembly as claimed in claim 5, wherein the first region and the second-first region comprise first conductive particles,
wherein the second-second region comprises second conductive particles, and
wherein conductivity of the first conductive particles is greater than conductivity of the second conductive particles.

9. The electrode assembly as claimed in claim 5, wherein the first region comprises first conductive particles,
wherein the second-first region comprises second conductive particles,
wherein the second-second region comprises third conductive particles,
wherein conductivity of the first conductive particles is greater than conductivity of the second conductive particles and the third conductive particles, and
wherein the conductivity of the second conductive particles is greater than the conductivity of the third conductive particles.

10. The electrode assembly as claimed in any one of claims 1 to 9, wherein conductivity of the resin layer gradually decreases in a direction moving away from the first region.

11. The electrode assembly as claimed in claim 1, wherein the conductive particles are disposed only in the first region.

12. The electrode assembly as claimed in any one of claims 1 to 10, wherein the conductive particles are disposed in the first region and a part of the second region.

13. The electrode assembly as claimed in claim 2, wherein an area of the second-first region is greater than an area of the second-second region.

14. The electrode assembly as claimed in any one of claims 1 to 13, wherein the uncoated portion is an electrode tab.

15. A secondary battery comprising:
a case; and
a secondary battery comprising the electrode assembly of any one of claims 1 to 14 housed in the case.
